# EUROPÄISCHE PATENTSCHRIFT

(11) **EP 3 115 193 B1**
(45) Veröffentlichungstag und Bekanntmachung des Hinweises auf die Patenterteilung: **16.10.2019**
(21) Anmeldenummer: 16178256.0
(22) Anmeldetag: 06.07.2016
(51) Int. Cl.: B32B 5/02, B05D 5/02, B05D 7/00, B32B 27/12, B32B 27/40, B32B 37/15, D06N 7/00, E04B 1/64, E04D 1/36, E04D 12/00

(54) **TRENNBAHN UND VERFAHREN ZUR HERSTELLUNG EINER TRENNBAHN**
SEPARATION SHEET AND METHOD FOR PRODUCING A SEPARATION SHEET
FEUILLE DE SEPARATION ET PROCEDE DE PRODUCTION D'UNE FEUILLE DE SEPARATION

(30) Priorität: 06.07.2015 DE 102015110888
(43) Veröffentlichungstag der Anmeldung: 11.01.2017
(73) Patentinhaber: IVT - Industrie Vertrieb Technik GmbH & Co. KG, 59439 Holzwickede (DE)
(72) Erfinder: Hosbach, Johannes, 59439 Holzwickede (DE); Blank, Andreas, 59439 Holzwickede (DE)
(74) Vertreter: von dem Borne, Andreas

(56) Entgegenhaltungen:
- EP-A2- 0 183 266
- EP-A2- 1 207 244
- DE-A1- 4 428 304

## Beschreibung

Die Erfindung betrifft eine Trennbahn, insbesondere für Metalldächer oder Metallfassaden, mit einer dampfdiffusionsoffenen Sperrlage und einer Abstandslage. Eine solche Trennbahn wird z. B. bei Metalldächern oder Metallfassaden unter der Metalleindeckung angeordnet, indem die Abstandslage der Metalleindeckung zugewandt und die Sperrlage der Metalleindeckung abgewandt ist. Die Abstandslage erzeugt folglich einen Abstand zwischen der Metalleindeckung und der dampfdiffusionsoffenen und wasserdichten Sperrlage. Auf diese Weise kann Feuchtigkeit (z. B. auf der Innenseite der Metalleindeckung auftretendes Kondensat) über die Sperrlage abgeführt werden. Eine solche Trennbahn ist für Metalldeckung im Zusammenhang mit hinterlüfteten und nicht hinterlüfteten Metalldächern und Metallfassaden geeignet.

Aus der Praxis ist eine derartige Trennbahn bekannt, bei welcher die Abstandslage von einem Abstandsgewirk mit Wirrstruktur aus Polypropylen gebildet und mit dem Abstandsgewirke bzw. der Wirrfaserstruktur punktuell verbunden ist, z. B. durch Ultraschallschweißen. Diese Trennbahnen, die von der Anmelderin unter der Produktbezeichnung Aqua-Protect M vertrieben werden, haben sich in der Praxis gut bewährt.

In der DE 100 24 030 B4 wird eine Trennbahn für Dachkonstruktionen, insbesondere Metalldächer, beschrieben, die aus einem bandförmigen Grundmaterial besteht, auf welches ein Material auf Kunststoffbasis in flüssiger Form an mehreren, vorbestimmten zueinander beabstandeten Stellen aufgebracht wird, wobei das flüssige Kunststoffmaterial unter Bildung von Abstandshaltern in Form flexibler Erhebungen in vorbestimmter Höhe aushärtet. Als flüssiges Material für die Herstellung der Erhebungen kann dabei ein Material eingesetzt werden, das Acryl, Latex, PVC und/oder Gummigranulat enthält.

Aus der DE 299 12 975 U1 kennt man eine Trennlage zum Abführen von Feuchtigkeit bei einer Metalldacheindeckung, bei welcher eine Abstandslage von einem dreidimensional verformten Netz oder von einer mit Öffnungen versehenen Noppenbahn gebildet wird. Die Abstandslage ist dabei auf die diffusionsoffene Bahn bzw. Sperrlage aufgeklebt.

In der WO 96/18781 A1 wird eine Trennbahn in Form einer Unterspannbahn für Dächer beschrieben, bei welcher die Abstandslage als Gitter ausgebildet ist, welches auf eine Diffusionsfolie aufgesiegelt ist. Dazu können das Gitter einerseits und die diffusionsoffene Folienbahn andererseits von Vorratsrollen abgewickelt und zusammengeführt werden. Im Einlaufzwickel beider Bahnen erfolgt mit Hilfe eines Infrarotstrahlers eine haftvermitteltende Erwärmung des Gitters und anschließend eine Verbindung.

Eine herkömmliche diffusionsoffene Dachunterspannbahn wird in der DE 10 2013 108 521 A1 beschrieben. Diese weist ein Trägervlies und eine wasserdichte, aber wasserdampfdurchlässige Sperrschicht und darauf eine Deckschicht auf, wobei die Deckschicht zumindest überwiegend aus Polyester besteht. Das Trägervlies besteht überwiegend aus Polypropylen oder Polyethylen, auf welches im heißen Zustand eine Schmelze der Sperrschicht aufgebracht wird, die beispielsweise aus EVA, EMAC, EBAC aus PE oder PP besteht oder eine andere Zusammensetzung besitzt.

Eine diffusionsoffene Dachunterspannbahn mit einer Membran aus einem Heiß-Schmelz-Klebefilm wird im Übrigen in der EP 1 207 244 B1 beschrieben, wobei der Heiß-Schmelz-Klebefilm aus EVA, PA, PVAL, PUR besteht. Der Träger kann aus PP, PET oder PE bestehen.

Dabei handelt es sich jedoch um herkömmliche Dachunterspannbahnen, die nicht mit einer Abstandslage ausgestattet sind und insoweit nicht für Metalldacheindeckungen eingesetzt werden.

Eine klassische Unterspannbahn mit einer wasserdampfdurchlässigen Polyurethanschicht ist ferner aus der DE 44 28 304 A1 bekannt.

Im Übrigen beschreibt die EP 0 183 266 eine Unterspannbahn für geneigte Dächer, die aus der dampfdiffussionsoffenen, aber oberflächenwasserdichten Folie und einer Verstärkungsschicht besteht. Zur Verbesserung der Diffussionsmöglichkeit und einer Erhöhung der Festigkeit ist eine Verstärkungsschicht aus einem offenporigen Weichschaumstoff und eine zwischen Weichschaumstoff und Folie angeordnete Armierung vorgesehen, wobei die Armierung aus einem reißfesten Gittergewebe besteht.

Die aus der Praxis bekannten Trennbahnen mit Abstandslagen, die insbesondere für Metalldächer oder Metallfassaden eingesetzt werden, haben sich in der Praxis gut bewährt, sie sind jedoch weiterentwicklungsfähig, und zwar insbesondere unter Berücksichtigung der Tatsache, dass die Bahnen unter Metalleindeckungen hohen Temperaturen ausgesetzt sind.

Der Erfindung liegt die Aufgabe zugrunde, eine Trennbahn, insbesondere für Metalldächer oder Metallfassaden, der eingangs beschriebenen Art zu schaffen, welche sich bei wirtschaftlicher Herstellung durch hohe Haltbarkeit und hohe Funktionalität auszeichnet.

Zur Lösung dieser Aufgabe lehrt die Erfindung eine Trennbahn mit den Merkmalen des Anspruchs 1. Es ist vorgesehen, dass die Sperrlage eine (wasser)dampfdiffusionsoffene (wasserdichte) Sperrschicht aus thermoplastischem Polyurethan aufweist.

Die Erfindung geht dabei von der Erkenntnis aus, dass sich die Eigenschaften und insbesondere die Haltbarkeit von Trennbahnen, die für Metalldächer oder Metallfassaden bestimmt sind und folglich Abstandslagen aufweisen, optimieren lassen, wenn die Sperrschicht aus thermoplastischem Polyurethan gefertigt wird. Eine solche Sperrschicht aus thermoplastischem Polyurethan zeichnet sich bei guter Funktionalität durch sehr hohe Temperaturbeständigkeit aus, so dass die Funktion der Sperrlage bzw. ihrer Sperrschicht selbst bei sehr hohen Temperaturen unter der Metalldeckung auch nach vielen Jahren nicht beeinträchtigt wird. Der erfindungsgemäßen Sperrschicht aus thermoplastischem Polyurethan kommt besondere Bedeutung in Verbindung mit einer Abstandslage zu, denn die Sperrlage bzw. ihre diffusionsoffene Sperrschicht ist nicht unmittelbar unterhalb der Dacheindeckung, sondern unter Zwischenschaltung der Abstandslage mit Abstand zu der Dacheindeckung angeordnet.

Die Abstandslage, die als 3-D-Strukturmatte ausgebildet ist, weist ein Abstandsgewirke auf. Das Abstandsgewirke weist eine Dicke von zumindest 3 mm, besonders bevorzugt zumindest 5 mm, auf, z. B. 6 mm bis 9 mm. Die Abstandslage bildet dabei mit dem Abstandsgewirke eine offene Struktur, die als Abstandshalter einen Abstand zwischen der Sperrlage und der Dacheindeckung, z. B. der Metalleindeckung, erzeugt. Diese zwischen Sperrlage und Dacheindeckung erzeugte offene Struktur ermöglicht es, dass sich dort Feuchtigkeit bzw. Wasser sammelt und entweder verdunstet oder (z. B. bei Steildächern) über den Spalt zwischen der Sperrlage und der Dacheindeckung abfließt. Dabei wird ein solches Abstandsgewirke bevorzugt aus Fäden und/oder Fasern mit einer verhältnismäßig großen Dicke von zumindest 0,1 mm, vorzugsweise zumindest 0,2 mm, besonders bevorzugt zumindest 0,3 mm, z. B. 0,4 mm bis 0,5 mm hergestellt. Es handelt sich - wie beschrieben - um ein "offenes" Abstandsgewirke welches bevorzugt ein Flächengewicht von 100 g/m² bis 500 g/m², z. B. 100 g/m² bis 400 g/m² aufweist. Das Abstandsgewirke ist dabei bevorzugt aus Fäden oder Fasern aus Polypropylen oder Polyamid oder auch aus TPU sowie alternativ aus Polyester gefertigt. Es ist vorgesehen, dass die Abstandslage einerseits ein Abstandsgewirke und andererseits eine Grundlage, nämlich ein Grundvlies, aufweist, welches mit dem Abstandsgewirke verbunden ist.

Die Sperrlage weist die bereits beschriebene diffusionsoffene aber wasserdichte Sperrschicht(-folie) aus thermoplastischem Polyurethan auf. Dabei kann diese Sperrschicht bevorzugt ein Flächengewicht von 20 bis 200 g/m² z. B. 40 bis 180 g/m² aufweisen. Diese Sperrschicht bildet die Funktionsschicht der Trennbahn, denn sie ist einerseits dampfdiffusionsoffen, andererseits jedoch wasserdicht und damit wasserundurchlässig, so dass Wasserdampf aus dem Gebäudeinneren in Richtung des Daches durch die Sperrschicht hindurchtreten kann, andererseits aber Flüssigkeit bzw. Wasser nicht von oben durch die Sperrschicht hindurchdringen kann.

Die Sperrlage weist im Übrigen nicht nur die diffusionsoffene Sperrschicht, sondern außerdem eine Trägerschicht auf, nämlich ein Trägervlies. Diese Trägerschicht ist mit der Sperrschicht verbunden.

Während beim Stand der Technik die Abstandslage mit der Sperrlage bzw. der Sperrschicht verklebt oder verschweißt wird, wird die Abstandslage besonders bevorzugt in die aus einer PU-Schmelze erstarrte Sperrschicht eingebettet. Dabei wird die Abstandslage, z. B. das Abstandsgewirke oder gegebenenfalls auch das Grundvlies der Abstandslage, im noch heißen Zustand der Sperrschicht mit dieser verbunden. Es ist folglich nicht erforderlich, zunächst die Abstandslage einerseits und die Sperrlage andererseits zu fertigen und danach zu verbinden, sondern erfindungsgemäß kann die Verbindung gleichsam im Zuge der Herstellung der Sperrschicht erfolgen. Gleiches gilt für die Verbindung der Sperrschicht mit der Trägerschicht der Sperrlage, z. B. dem Trägervlies.

Das Trägervlies und/oder das Grundvlies können aus Polyester oder Polypropylen oder alternativ aus Glasfasern hergestellt sein.

Optional besteht die Möglichkeit, dass die Sperrlage nicht nur die Trägerschicht und die mit der Trägerschicht verbundene Sperrschicht aus thermoplastischem Polyurethan aufweist, sondern zusätzlich kann auf der der Sperrschicht gegenüberliegenden Seite des Trägervlieses eine weitere Sperrschicht aus thermoplastischem Polyurethan vorgesehen sein. Die Sperrlage weist dann folglich die Trägerschicht auf, die beidseitig mit einer Sperrschicht aus thermoplastischem Polyurethan versehen ist. Diese - bezogen auf die Abstandslage - rückseitige Polyurethanschicht kann in derselben Weise ausgebildet sein, wie die der Abstandslage zugewandte Polyurethanschicht.

Gegenstand der Erfindung ist auch ein Verfahren zur Herstellung einer Trennbahn der eingangs beschriebenen Art. Dieses Verfahren ist erfindungsgemäß dadurch gekennzeichnet, dass die Abstandslage bereichsweise in die thermoplastische Sperrschicht aus Polyurethan eingebettet wird. Dieses kann z. B. dadurch realisiert werden, dass die Abstandslage im Zuge der Herstellung der Sperrschicht in die (noch nicht erstarrte) PU-Schmelze eingebettet und beim Erstarren der PU-Schmelze in der Sperrschicht fixiert wird. So besteht z. B. die Möglichkeit, die Sperrschicht durch Extrusion (mit einer Breitschlitzdüse) herzustellen und dabei die Abstandslage im Zuge der Extrusion mit der Sperrschicht zu verbinden. In gleicher Weise besteht die Möglichkeit, das Trägervlies bzw. die Trägerschicht der Sperrlage im Zuge der Extrusion der Sperrschicht mit der Sperrschicht zu verbinden.

Insgesamt zeichnet sich die erfindungsgemäße Trennbahn durch eine sehr wirtschaftliche Herstellung und hohe Haltbarkeit aus. Insbesondere lässt sich die Abstandslage bei der Verwendung von Polyurethan für die Herstellung der Sperrschicht sehr einfach im Zuge der Herstellung mit der Sperrschicht verbinden. Außerdem zeichnet sich die Sperrschicht aus Polyurethan durch hohe Wärmebeständigkeit und damit hohe Haltbarkeit und folglich Langzeitbeständigkeit aus.

Besonders bevorzugt lässt sich die Trennbahn in einem Rolle-zu-Rolle-Prozess herstellen. Dazu wird auf die Figurenbeschreibung verwiesen.

Im Folgenden wird die Erfindung anhand von lediglich Ausführungsbeispiele darstellenden Zeichnungen näher erläutert. Es zeigen:
- Fig. 1: eine Dachkonstruktion mit Metalldacheindeckung und mit einer erfindungsgemäßen Trennbahn in einer vereinfachten Darstellung,
- Fig. 2: eine nicht von der Erfindung erfasste Trennbahn im Zuge der Herstellung und
- Fig. 3: die Trennbahn nach Fig. 2 in einer erfindungsgemäßen Ausführungsform.

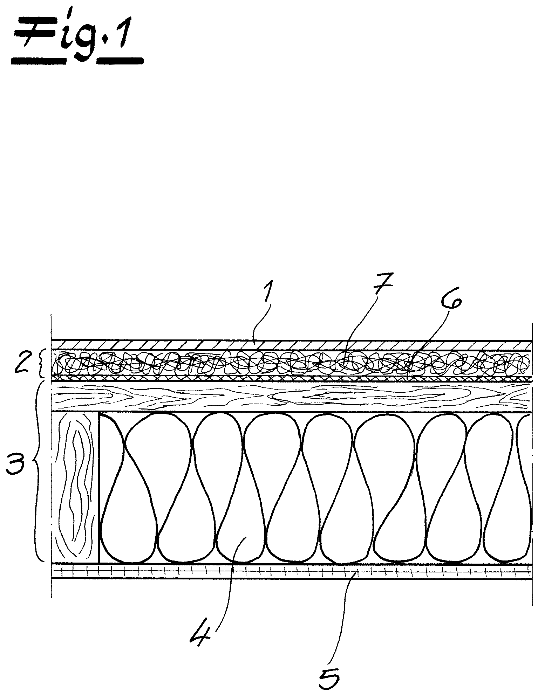

Fig. 1 zeigt schematisch vereinfacht eine übliche Konstruktion eines Metalldaches. Die Metalldeckung 1 ist unter Zwischenschaltung einer Trennbahn 2 auf einer Unterkonstruktion 3, z. B. aus Holz, angeordnet. Im Übrigen ist eine Dämmung 4 angedeutet, die unterhalb der Trennbahn 2 in die Holzkonstruktion integriert ist. Darunter ist eine Luft- und Dampfsperre 5 angeordnet. Die erfindungswesentliche Trennbahn 2 weist eine der Metalleindeckung 1 abgewandte Sperrlage 6 und eine der Metalleindeckung 1 zugewandte Abstandslage 7 auf. Die Sperrlage 6 ist wasserdampfdiffusionsoffen und zugleich wasserdicht, so dass Feuchtigkeit, die sich unterhalb der Metalleindeckung 1 sammelt, z. B. durch Kondensation, in dem durch die Abstandslage gebildeten Spalt zwischen Sperrlage 6 und Metalleindeckung 1 gesammelt wird und entweder verdunsten kann oder - z. B. bei Steildächern oder auch Fassaden - abfließen kann. Das Abstandsgewirke hat dabei eine (offene) Wirrstruktur bzw. Wirrfaserstruktur und bildet eine 3D-Strukturmatte.

Die Abstandslage 7 weist ein Abstandsgewirke 8 auf. Es handelt sich um ein verhältnismäßig dickes und zugleich offenes Abstandsgewirke 8, so dass einerseits ein ausreichender Abstand zwischen Sperrlage 6 und Metalleindeckung 1 erzeugt wird und andererseits Flüssigkeit gut abgeführt werden kann.

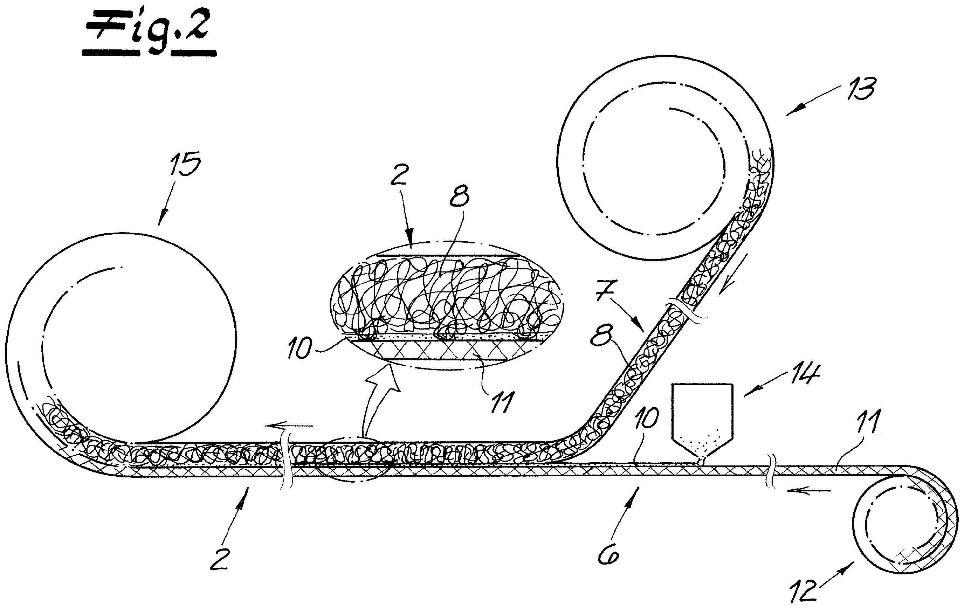

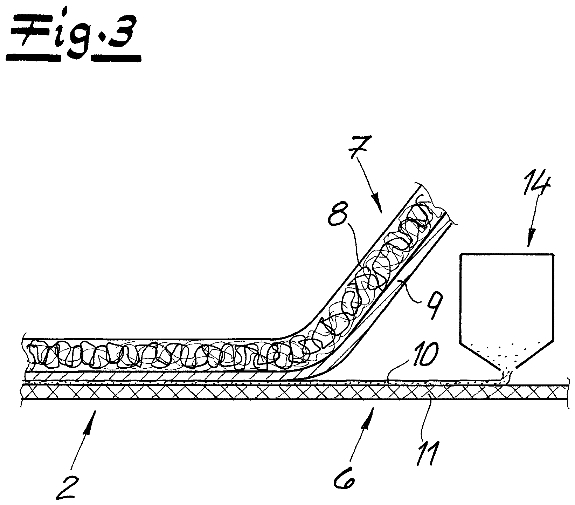

Es besteht die Möglichkeit, dass die Abstandslage 7 ausschließlich von dem Abstandsgewirke oder Abstandsvlies 8 gebildet wird (vgl. Fig. 2) oder dass - erfindungsgemäß - die Abstandslage 7 ein mit dem Abstandsgewirke 8 verbundenes Grundvlies 9 aufweist (vgl. Fig. 3).

Die Sperrlage 6 weist eine dampfdiffusionsoffene und wasserdichte Sperrschicht 10 und ein Trägervlies 11 auf, welches mit der Sperrschicht 10 verbunden ist.

Erfindungsgemäß ist die Sperrschicht 10 aus thermoplastischem Polyurethan gefertigt. Bei dem Trägervlies 11 kann es sich um ein Trägervlies aus Polyester oder Polypropylen handeln. Das Abstandsgewirke 8 kann aus Polyamid oder Polypropylen (oder TPU) gefertigt sein. Das Grundvlies 9 kann ebenfalls aus Polyester oder Polypropylen gefertigt sein.

Die Dicke des Abstandsgewirkes beträgt im Ausführungsbeispiel zumindest 5 mm, z. B. etwa 8 mm Dicke meint dabei die maximale Dicke und folglich die maximale Ausdehnung des Abstandsgewirkes 8 quer zur Längserstreckung der Trennbahn 2.

Die Herstellung der erfindungswesentlichen Trennbahn 2 soll anhand der Fig. 2 und 3 erläutert werden. Von besonderer Bedeutung ist dabei die Tatsache, dass die Abstandslage 7 bereichsweise, das heißt mit einem bestimmten Teil ihrer Dicke, in die thermoplastische Sperrschicht 10 integriert wird. Dazu ist es zweckmäßig, die Abstandslage 7 im Zuge der Herstellung der Sperrschicht 10 in die PU-Schmelze einzubetten, so dass die Abstandslage 7 beim Erstarren der PU-Schmelze in der Sperrschicht 10 fixiert wird. Dieses gelingt - so wie in den Fig. 2 und 3 angedeutet - besonders bevorzugt im Zuge der Kunststoff-Extrusion der TPU-Sperrschicht.

So zeigt Fig. 2 eine Ausführungsform, bei welcher das vorgefertigte Trägervlies 11 von einer ersten Rolle 12 abgewickelt wird und die Abstandslage 7 wird von einer zweiten Rolle 13 abgewickelt. Die Abstandslage 7 und das Trägervlies 11 werden mit der aus der Extrusionsdüse 14 austretenden PU-Schmelze der Sperrschicht 10 verbunden. Die auf diese Weise hergestellte Trennbahn 2 kann dann auf einer weiteren Rolle 15 aufgewickelt werden, so dass insgesamt ein "Rolle-zu-Rolle-Prozess" realisiert werden kann.

In entsprechender Weise lässt sich die in Fig. 3 dargestellte erfindungsgemäße Ausführungsform der Trennbahn 2 herstellen, bei welcher die Abstandslage 7 nicht ausschließlich von einem Abstandsgewirke 8 gebildet ist, sondern bei welcher die Abstandslage 7 einerseits das Abstandsgewirke 8 und andererseits ein Grundvlies 9 aufweist. In diesem Fall wird die Abstandslage 7 über das Grundvlies 9 mit der thermoplastischen Sperrschicht 10 verbunden, indem das Grundvlies 9 bereichsweise und folglich über einen bestimmten Teil seiner Dicke in die Sperrschicht 10 eingebettet wird.

Im Übrigen kann optional auf der der Sperrschicht 10 gegenüberliegenden Rückseite des Trägervlieses 11 eine weitere Schicht bzw. Sperrschicht vorgesehen sein, die ebenfalls aus thermoplastischem Polyurethan gefertigt sein kann. Diese ist in den Figuren nicht dargestellt.

## Patentansprüche

1. Trennbahn (2) insbesondere für Metalldächer oder Metallfassaden, mit
- einer dampfdiffusionsoffenen Sperrlage (6) und
- einer Abstandslage (7),
wobei die Abstandslage (7) ein Abstandsgewirke (8) mit einer Dicke von zumindest 3 mm und ein mit dem Abstandsgewirke (8) verbundenes Grundvlies (9) aufweist,
wobei die Abstandslage (7) mit dem Abstandsgewirke (8) eine offene Struktur für die Ansammlung von Wasser bildet,
wobei die Sperrlage (6) eine diffusionsoffene Sperrschicht (10) aus thermoplastischem Polyurethan aufweist,
wobei die Sperrlage (6) ein Trägervlies (11) und die mit dem Trägervlies (11) verbundene Sperrschicht (10) aufweist.

2. Trennbahn nach Anspruch 1, **dadurch gekennzeichnet, dass** das Abstandsgewirke (8) eine Dicke von zumindest 5 mm aufweist.

3. Trennbahn nach Anspruch 1 oder 2, **dadurch gekennzeichnet, dass** das Abstandsgewirke (8) aus Fäden und/oder Fasern mit einer Dicke von zumindest 0,2 mm, vorzugsweise zumindest 0,3 mm, ausgebildet ist.

4. Trennbahn nach einem der Ansprüche 1 bis 3, **dadurch gekennzeichnet, dass** die Sperrschicht (10) aus thermoplastischem Polyurethan ein Flächengewicht von 20 bis 200 g/m², z. B. 40 bis 180 g/m² aufweist.

5. Trennbahn nach einem der Ansprüche 1 bis 4, **dadurch gekennzeichnet, dass** das Abstandsgewirke (8) ein Flächengewicht von 100 g/m² bis 500 g/m² aufweist.

6. Trennbahn nach einem der Ansprüche 1 bis 5, **dadurch gekennzeichnet, dass** das Abstandsgewirke (8) aus Fäden oder Fasern aus Polypropylen, Polyamid oder TPU gefertigt ist.

7. Trennbahn nach einem der Ansprüche 1 bis 6, **dadurch gekennzeichnet, dass** die Abstandslage (7), z. B. das Abstandsgewirke (8) und/oder das Grundvlies (9) bereichsweise in die aus einer PU-Schmelze erstarrte Sperrschicht (10) eingebettet ist.

8. Verfahren zum Herstellen einer Trennbahn (2) nach einem der Ansprüche 1 bis 7, **dadurch gekennzeichnet, dass** die Abstandslage (7) bereichsweise in die thermoplastische Sperrschicht (10) aus Polyurethan eingebettet wird.

9. Verfahren nach Anspruch 8, **dadurch gekennzeichnet, dass** die Abstandslage (7) im Zuge der Herstellung der Sperrschicht (10) in die Polyurethanschmelze eingebettet und beim Erstarren der Polyurethanschmelze in der Sperrschicht (10) fixiert.

10. Verfahren nach Anspruch 9, **dadurch gekennzeichnet, dass** die Sperrschicht (10) durch Extrusion hergestellt wird, wobei die Abstandslage (7) im Zuge der Extrusion mit der Sperrschicht (10) verbunden wird.

## Claims

1. A separation sheet (2), in particular for metal roofs or metal facades, comprising
- a barrier layer (6), which is open for vapor diffusion and
- a spacer layer (7),
wherein the spacer layer (7) has a spacer fabric (8) with a thickness of at least 3 mm and a base non-woven fabric (9) connected to the spacer fabric (8), wherein the spacer layer (7) forms an open structure for the accumulation of water with the spacer fabric (8),
wherein the barrier layer (6) has a barrier coat (10) that is open for vapor diffusion, of thermoplastic polyurethane,
wherein the barrier layer (6) has a non-woven backing (11) and the barrier coat (10), which is connected to the non-woven backing (11).

2. The separation sheet according to claim 1, **characterized in that** the spacer fabric (8) has a thickness of at least 5 mm.

3. The separation sheet according to claim 1 or 2, **characterized in that** the spacer fabric (8) is formed of threads and/or fibers comprising a thickness of at least 0.2 mm, preferably at least 0.3 mm.

4. The separation sheet according to one of claims 1 to 3, **characterized in that** the barrier coat (10) of thermoplastic polyurethane has a surface weight of between 20 and 200 g/m², e.g. between 40 and 180 g/m².

5. The separation sheet according to one of claims 1 to 4, **characterized in that** the spacer fabric (8) has a surface weight of between 100 g/m² and 500 g/m².

6. The separation sheet according to one of claims 1 to 5, **characterized in that** the spacer fabric (8) is made of threads or fibers of polypropylene, polyamide or TPU.

7. The separation sheet according to one of claims 1 to 6, **characterized in that** the spacer layer (7), e.g. the spacer fabric (8) and/or the base non-woven fabric web (9) is embedded area by area into the barrier coat (10), which solidified from a PU melt.

8. A method for producing a separation sheet (2) according to one of claims 1 to 7, **characterized in that** the spacer layer (7) is embedded area by area into the thermoplastic barrier coat (10) made of polyurethane.

9. The method according to claim 8, **characterized in that** the spacer layer (7) is embedded into the polyurethane melt in the course of the production of the barrier coat (10) and is fixed in the barrier coat (10) in response to the solidification of the polyurethane melt.

10. The method according to claim 9, **characterized in that** the barrier coat (10) is produced by means of extrusion, wherein the spacer layer (7) is connected to the barrier coat (10) in the course of the extrusion.

## Revendications

1. Bande de séparation (2), en particulier pour toit métallique ou façade métallique, comportant
- une couche faisant barrage ouverte à la diffusion de vapeur (6) et
- une couche d'écartement (7),
la couche d'écartement (7) présentant un tissu d'écartement (8) d'une épaisseur d'au moins 3 mm et un non-tissé de base (9) connecté au tissu d'écartement (8),
la couche d'écartement (7) constituant avec le tissu d'écartement (8) une structure ouverte pour la collecte d'eau,
la couche faisant barrage (6) présentant une épaisseur faisant barrage (10) en polyuréthane thermoplastique, la couche faisant barrage (6) présentant un non-tissé support (11) et une épaisseur faisant barrage (10) connectée au non-tissé support (11).

2. Bande de séparation selon la revendication 1, **caractérisée en ce que** le tissu d'écartement (8) présente une épaisseur d'au moins 5 mm.

3. Bande de séparation selon la revendication 1 ou 2, **caractérisée en ce que** le tissu d'écartement (8) est composé de fils et/ou de fibres d'une épaisseur d'au moins 0,2 mm, de préférence d'au moins 0,3 mm.

4. Bande de séparation selon une des revendications 1 à 3, **caractérisée en ce que** la couche faisant barrage (10) en polyuréthane thermoplastique présente un grammage de 20 à 200 g/m², par exemple 40 à 180 g/ m².

5. Bande de séparation selon une des revendications 1 à 4, **caractérisée en ce que** le tissu d'écartement (8) présente un grammage de 100 g/m² à 500 g/m².

6. Bande de séparation selon nationaliste une des revendications 1 à 5, **caractérisée en ce que** le tissu d'écartement (8) est fabriqué à partir de fils ou de fibres de polypropylène, polyamide ou TPU.

7. Bande de séparation selon une des revendications 1 à 6, **caractérisée en ce que** la couche d'écartement (7), par exemple le tissu d'écartement (8) et/ou le non-tissé de base (9) est par endroits encastrée dans une couche faisant barrage (10) solidifiée à partir d'une coulée de PU.

8. Bande de séparation selon une des revendications 1 à 7, **caractérisée en ce que** la couche d'écartement (7) est par endroits encastrée dans la couche thermoplastique faisant barrage (10) en polyuréthane.

9. Procédé selon la revendication 8, **caractérisé en ce que** la couche d'écartement (7), au cours de la réalisation de la couche faisant barrage (10), est encastrée dans la coulée de polyuréthane et fixée dans la couche faisant barrage (10) lors de la solidification de la coulée de polyuréthane.

10. Procédé selon la revendication 9, **caractérisé en ce que** la couche faisant barrage (10) est fabriquée par extrusion, la couche d'écartement (7) étant connectée à la couche faisant barrage (10) au cours de l'extrusion.
